# EUROPÄISCHE PATENTANMELDUNG

(11) **EP 4 461 515 A2**
(43) Veröffentlichungstag der Anmeldung: **13.11.2024**
(21) Anmeldenummer: 24180768.4
(22) Anmeldetag: 14.03.2019
(51) Int. Cl.: B29C 65/74

(54) **VORRICHTUNG UND VERFAHREN ZUM VERKLEBEN VON KUNSTSTOFFPROFILEN**

(30) Priorität: 14.03.2018 DE 102018105947
(62) Teilanmeldung aus: 19163013.6
(71) Anmelder: Urban GmbH & Co. Maschinenbau KG, 87700 Memmingen (DE)
(72) Erfinder: Seitel, Thomas, 87781 Ungerhausen (DE)
(74) Vertreter: Patentanwälte Olbricht, Buchhold, Keulertz Partnerschaft mbB

(57) **Zusammenfassung**

Die Erfindung betrifft eine Vorrichtung für das Verbinden von zwei Kunststoffprofilen, zum Beispiel für die Herstellung eines Tür- oder Fensterrahmens oder Teilrahmens. Die Vorrichtung weist dabei eine spanabhebende Bearbeitungseinheit und eine Klebstoffspendeeinheit auf, wobei die spanabhebende Bearbeitungseinheit für eine spanabhebende Bearbeitung zumindest im Verbindungsbereich der zu verbindenden Kunststoffprofile vorgesehen ist. Die Klebstoffspendeeinheit ist für ein Aufbringen einer Klebstoffschicht zumindest auf einem Profil im Verbindungsbereich der zu verbindenden Kunststoffprofile vorgesehen.

## Beschreibung

Die Erfindung betrifft ein Verfahren für das Verbinden von zwei Kunststoffprofilen, zum Beispiel für die Herstellung eines Tür- oder Fensterrahmens oder Teilrahmens. Ferner betrifft die Erfindung eine Vorrichtung zum Verbinden von zwei Kunststoffteilen.

In bekannten Verfahren zum Verbinden von zwei Kunststoffprofilen werden zwei Kunststoffprofile, z.B. eines Türrahmens oder eines Fensterrahmens oder eines Rahmenteils, mittels Schweißens zusammengefügt. Beim Verschweißen von Kunststoffteilen entsteht allerdings im Bereich der Verbindungsfläche der beiden Kunststoffprofile infolge der Erhitzung des Kunststoffs und des Zusammenbringens (des "Fügens") der Kunststoffprofile unvermeidlich eine sogenannte Schweißwulst, d.h. ein länglicher aus geschmolzenem Kunststoff gebildeter und sich an der Außenseite entlang der Verbindungsfläche erstreckender zumeist wenig ästhetischer Vorsprung. Wenn sich die Schweißwulst an einer Sichtfläche der beiden Kunststoffprofile erstreckt, muss die Schweißwulst vor einer Weiterverarbeitung der verbundenen Kunststoffprofile in einem eigenen Arbeitsschritt abgetragen werden, was mit erhöhtem Zeitaufwand und erhöhten Kosten einhergeht.

Es ist daher Aufgabe der vorliegenden Erfindung, ein Verbinden von zwei Kunststoffprofilen unter Meidung der zuvor genannten Nachteile sowie Sparen von Zeit und Kosten zu ermöglichen.

Die Aufgabe wird einerseits durch ein Verfahren für das Verbinden von zwei Kunststoffprofilen und andererseits durch eine Vorrichtung für das Verbinden von zwei Kunststoffprofilen, zum Beispiel für die Herstellung eines Tür- oder Fensterrahmens oder Teilrahmens, gelöst.

Das erfindungsgemäße Verfahren für das Verbinden von zwei Kunststoffprofilen, zum Beispiel für die Herstellung eines Tür- oder Fensterrahmens oder Teilrahmens, zeichnet sich durch die Abfolge, folgender Schritte aus:
- spanabhebende Bearbeitung zumindest eines Kunststoffprofils zumindest in einem Verbindungsbereich dieses Kunststoffprofils
- Zusammenbringen der beiden zu verbindenden Kunststoffprofile derart, dass sich aus den jeweiligen Verbindungsbereichen der Kunststoffprofile ein gemeinsamer Verbindungsraum ergibt
- Einbringen von Klebstoff in den Verbindungsraum um so die beiden Kunststoffprofile miteinander zu verbinden.

Das erfindungsgemäß vorgeschlagene Verfahren löst die eingangs gestellte Aufgabe überzeugend und effektiv. Anstelle eines Verschweißens wird nunmehr ein Verkleben der Kunststoffprofile vorgeschlagen wodurch die Bildung einer Schweißwulst, die ursächlich verantwortlich für den erheblichen Nachbearbeitungsaufwand war, zuverlässig vermieden wird.

Günstigerweise ist gefunden worden, dass sich das erfindungsgemäß vorgeschlagene Verfahren sowohl zur Ausbildung einer Eckverbindung bei einem Rahmen eignet, wie auch zur Einarbeitung eines sogenannten Kämpfers in den Fensterrahmen. Der Kämpfer unterteilt dabei einen zum Beispiel rechtwinkligen Rahmen in zwei Teilrahmen, wobei der Kämpfer üblicherweise auch ein Kunststoffprofilstab ist, der rechtwinklig an seiner Stirnseite an einen als Holm bezeichneten zweiten Kunststoffprofilstab anschließt. Da sich das erfindungsgemäß vorgeschlagene Verfahren für beide Verbindungsaufgaben anbietet, können diese Aufgaben geschickterweise auch in dergleichen Vorrichtung realisiert werden, was die Investitionskosten entsprechend reduziert.

Bei der Reihenfolge der vorgeschlagenen Schritte ist die Erfindung variabel. Natürlich ist der Schritt des Einbringens von Klebstoff erst dann möglich, wenn die beiden zu verbindenden Kunststoffprofile einander angenähert sind, gegebenenfalls auch berühren also gefügt oder wie hier beschrieben zusammengebracht sind. In dieser Konstellation haben die beiden Kunststoffprofile aber bereits ihre endgültige Lage zueinander eingenommen und es erfolgt dann das Einbringen des Klebstoffes in den Verbindungsraum, der zumindest einseitig von den Verbindungsbereich des ersten Kunststoffprofiles und andererseits von den Verbindungsbereich des zweiten Kunststoffprofiles begrenzt ist.

Hierin liegt ein wesentlicher Vorteil der Erfindung, da der Füge- bzw. Zusammenbring-Schritt abgeschlossen wird bevor der Klebstoff eingebracht wird und so grundsätzlich auch noch die Möglichkeit besteht, die Kunststoffprofile zueinander auszurichten wenn entsprechende Fehllagen erkannt werden.

Da die zu verbindenden Kunststoffprofile im Schnitt gesehen (also zumindest an ihrer Gehrungsfläche bzw. Stirnseite) aus einer Vielzahl von Kammern bestehen, die durch entsprechende Kammerstege voneinander getrennt sind, kann eine feste Grenze für den Verbindungsbereich an dem jeweiligen Kunststoffprofil nicht definiert werden, vielmehr erstreckt sich der Verbindungsbereich variabel. Auch der Verbindungsraum ist insofern flexibel zu verstehen und erstreckt sich im jeden Fall dorthin, wo der eingebrachte Klebstoff hinfließt und insbesondere an den Kammerstegen anhaftet und so auch eine mechanisch belastbare Verbindung ergibt. Es ist klar, dass durch eine höhere Menge an Klebstoff der Verbindungsraum größer wird, da dann eine größere Fläche der Kammerstege mit Klebstoff benutzt bzw. verbunden wird.

Der Pfiff der Erfindung liegt darin, dass eben gerade durch diese flexible Gestaltung des Verbindungsraumes die Festigkeit der Rahmen, gerade im Eckbereich, durch entsprechende Steuerung des Klebstoffes den jeweiligen Bedürfnissen angepasst werden kann und so auch der Verbrauch an Klebstoff steuerbar ist und somit auch neben einer Materialeinsparung natürlich auch Kosten eingespart werden.

Dabei ist der Schritt des Zusammenbringen der beiden zu verbindenden Kunststoffprofile und der Schritt des Einbringens von Klebstoff nicht so eng miteinander verbunden, als das nicht zwischen diesen beiden Schritten noch ein anderer Schritt eingeschoben werden kann. Dieser andere Schritt kann zum Beispiel der Schritt der spanabhebenden Bearbeitung sein.

Daher umfasst der erfindungsgemäße Vorschlag folgende Reihenfolgen (und zwar in genau dieser Reihenfolge, gegebenenfalls aber auch mit weiteren Bearbeitungsschritten, die zwischen diesen Schritten liegen).

Erste mögliche Reihenfolge:
- spanabhebende Bearbeitung zumindest eines Kunststoffprofils
- Zusammenbringen der beiden zu verbindenden Kunststoffprofile
- Einbringen von Klebstoff in den Verbindungsraum

Zweite mögliche Reihenfolge:
- Zusammenbringen der beiden zu verbindenden Kunststoffprofile
- spanabhebende Bearbeitung zumindest eines Kunststoffprofils
- Einbringen von Klebstoff in den Verbindungsraum

Es ist klar, dass vor, während oder nachfolgend zu den vorgenannten Reihenfolgen noch weitere Schritte, gegebenenfalls auch Wiederholungsschritte der einzelnen bereits genannten Schritte erfolgen können auch diese Varianten sind von der Erfindung mit umfasst. Auch ist es vorgesehen, dass mit der spanbearbeitenden Bearbeitung nicht nur ein Kunststoffprofil, sondern gleichzeitig beide Kunststoffprofile, die hernach zu verbinden sind, bearbeitet werden.

Auch der Schritt des Zusammenbringens der beiden zu verbindenden Kunststoffprofile umfasst im Rahmen der Offenbarung dieser Erfindung eine Vielzahl von Varianten. Zunächst umfasst das Zusammenbringen ein tatsächliches sattes Anliegen der/dem Begrenzungsfläche/Verbindungsbereich des ersten Kunststoffprofiles an einer/m Begrenzungsfläche / Verbindungsbereich des zweiten Kunststoffprofiles. In diesem spaltsfreien Fall bildet sich der Verbindungsraum zum Beispiel insbesondere in den Innenkammern des der Kunststoffprofile aus. Daher erstreckt sich der Verbindungsbereich entsprechend in diesen Endbereich des Kunststoffprofiles.

Des Weiteren umfasst das Zusammenbringen ein teilweises Anliegen der/dem Begrenzungsfläche/Verbindungsbereich des ersten Kunststoffprofiles an einer/m Begrenzungsfläche / Verbindungsbereich des zweiten Kunststoffprofiles. In dieser Variante befindet sich also ein gewisser Abstand oder Spalt zwischen den beiden Begrenzungsflächen/Verbindungsbereichen. Dieser Spalt kann zum Beispiel als Aufnahmeraum dienen und zählt dann ebenfalls zum Verbindungsraum. Der Aufnahmeraum beherbergt dann zum Beispiel das Verbindungsstück.

Des Weiteren umfasst das Zusammenbringen auch eine Endlage der beiden Kunststoffprofile zueinander derart, dass sich diese nicht berühren, also einen gewissen Spalt zwischen sich begrenzen. Die Spaltbreite ist letztendlich von den Klebeeigenschaften des eingesetzten Klebstoffes abhängig.

Es sei dabei auch erwähnt, dass durch die spanabhebende Bearbeitung natürlich eine innenliegende Abstufung, aber auch eine außenliegende Abstufung herstellbar ist derart, dass an der äußeren Sichtfläche ein Spalt verbleibt, innenseitig aber sehr wohl ein unmittelbares Anliegen des ersten Kunststoffprofiles auf dem zweiten Kunststoffprofil erfolgt. All diese Varianten können durch den erfindungsgemäßen Vorschlag realisiert werden.

Als spanabhebende oder zerspanende (was im Sinne dieser Anmeldung als gleichwertig anzusehen ist) Bearbeitung wird hierbei insbesondere ein Bohren oder ein Fräsen verstanden.

Günstiger Weise wird der Klebstoff in den Verbindungsraum eingespritzt, dies ist aber nicht die einzige Möglichkeit, den Klebstoff in den Verbindungsraum einzubringen. Es ist zum Beispiel auch möglich den Klebstoff über ein Verbindungsstück in den Verbindungsraum einzubringen, wobei das Verbindungsstück zum Beispiel mit dem Klebstoff getränkt oder beschichtet ist.

Des Weiteren ist in dem Vorschlag vorteilhafter Weise vorgesehen, dass durch die spanabhebende Bearbeitung die jeweiligen Verbindungsbereiche der Kunststoffprofile zueinander parallel ausgerichtet werden.

Eine solche Vorgehensweise hat den Vorteil, dass die beiden Verbindungsbereiche, zum Beispiel die Gehrungsflächen im Endbereich der Kunststoffprofile, bezüglich ihrer abschließenden Lage im Rahmen exakt parallel vorbereitet sind und dann, auf ihrer gesamten Fläche mit Klebstoff bestrichen, benetzt oder ausgestattet, einen festen Verbund dieser beiden Kunststoffprofilteile ergeben.

Des Weiteren ist in dem Vorschlag vorteilhafter Weise vorgesehen, dass durch die spanabhebende Bearbeitung in dem jeweiligen Verbindungsbereich ein Aufnahmeraum, gebildet wird. Der vorgeschlagene Aufnahmeraum wird dabei zum Beispiel zusätzlich zu der Parallelbearbeitung hergestellt. Der Aufnahmeraum ist dabei zum Beispiel als Tasche oder Abstufung vorgesehen und dient zur Aufnahme eines Verbindungsstückes oder eines anderen Elementes. Geschickterweise wird dieser mit dem gleichen zerspanenden Bearbeitungswerkzeug hergestellt, das auch für die Parallelbearbeitung verwendet worden ist, wobei in diesem Zusammenhang eine entsprechende CNC Führung des spanabheben Bearbeitungswerkzeuge zumindest entlang zweier vorzugsweise entlang dreier Raumachsen von Vorteil ist.

Die Einarbeitung eines Aufnahmeraumes erfolgt vorzugsweise an der Gehrungsfläche oder Stirnseite des Profils, ist auf diese aber nicht beschränkt. Sie kann natürlich auch an einer Mantelseite, und somit einer Seitenfläche erfolgen.

Bei einer bevorzugten Ausgestaltung des Vorschlags ist vorgesehen, dass der bzw. ein Aufnahmeraum in den jeweiligen Verbindungsbereich nach oder vor dem Schritt des Zusammenbringens der beiden zu verbindenden Kunststoffprofile, insbesondere vor dem Schritt der spanabhebenden, insbesondere parallelen spanabhebenden Bearbeitung des Kunststoffprofiles in den jeweiligen Verbindungsbereich eingearbeitet wird, und der mindestens eine Aufnahmeraum mindestens teilweise den Verbindungsraum bildet.

Es sei an dieser Stelle darauf hingewiesen, dass die gewählte Formulierung "der bzw. ein Aufnahmeraum" zum Ausdruck bringen soll, dass die Einarbeitung des Aufnahmeraumes in diesen Anspruch unabhängig von dem oben vorgestellten Vorschlag (Einführung des Begriffes "Aufnahmeraum") erfolgen kann. So ist es zum Beispiel möglich, dass die Einarbeitung des Aufnahmeraumes zum Beispiel bei einem zweiten spanabhebenden Bearbeitungsschritt erfolgt, der dem ersten spanabhebenden Bearbeitungsschritt, zum Beispiel einer Parallelbearbeitung in der Reihenfolge der Abarbeitung der Schritte nachfolgt.

Die Formulierung bringt zum Ausdruck, dass die Einarbeitung des Aufnahmeraumes im Offenbarungsgehalt der Erfindung flexibel ist, was für den Fachmann auch nachvollziehbar und klar ist.

Insbesondere ist in diesem Zusammenhang interessant, dass die spanabhebende Bearbeitung, insbesondere auch die Einarbeitung des Aufnahmeraumes in einem dem Klebeprozess vorgeschalteten Aggregat, also in einer eigenen Aufspannung erfolgen kann. Eine solche Prozessfolge, bei dem die einzelnen Schritte auf mehrere voneinander getrennte Maschinen verteilt sind, gehören zur Erfindung.

In einer vorteilhaften Ausgestaltung ist vorgesehen, dass vor oder nach dem Zusammenbringen der beiden zu verbindenden Kunststoffprofile in den Aufnahmeraum ein Verbindungsstück eingeführt wird und die beiden Kunststoffprofile über das Verbindungsstück miteinander verbunden, insbesondere verklebt werden.

Die Ausgestaltung des Verbindungsstückes ist nach der Erfindung sehr variabel. Zunächst ist es möglich, dass das Verbindungsstück winkelig ausgeführt ist und ein Stück weit in die jeweiligen Endbereiche der zu verbindenden Kunststoffprofile einsteht und in diesen eingeklebt wird. Hierbei ist es zum Beispiel möglich, dass das Verbindungsstück in einer innen (in der Rahmen Innenecke) offenen Aufnahmetasche die den Aufnahmeraum umfasst eingeschoben wird, wenn die beiden Kunststoffprofile bereits in der gewünschten Endlage angeordnet sind.

Alternativ ist es möglich, die Mantelfläche der Kunststoffprofile unversehrt zu lassen und in der Gärungsfläche eine entsprechende Ausnehmung einzuprägen in die dann das winkelig Verbindungsstück eingesetzt wird, welches gegebenenfalls bereits mit Klebstoff benetzt ist. Auch eine solche Variante gehört zur Erfindung.

Des weiteren ist für die Ausgestaltung des Verbindungsstückes eine im wesentlichen flächige Variante vorgesehen, die insbesondere einen Versatz der Lagen der Kammerstege der des ersten und zweiten Kunststoffprofiles zueinander ausgleicht. So ist es aufgrund Maßtoleranzen bei der Produktion der Kunststoffprofile möglich, dass die Lagen der miteinander zusammen zu klebenden Kammerstege des ersten und zweiten Kunststoffprofiles nicht genau gleich sind und dann wird ein stabiler Verbund über dieses flächige, zum Beispiel netzartige, mit Klebstoff ausgestatteten Verbindungsstück erreicht.

In diesem Fall ist die Tiefe des Aufnahmeraumes an die Dicke des Verbindungsstückes angepasst. Der Aufnahmeraum ist dabei allseitig von einem Profilrand umgeben derart, dass das Verbindungsstück von außen nicht sichtbar ist. Geschickterweise wird dabei die Größe des Aufnahmeraumes an die Größe des flächigen Verbindungsstückes angepasst.

Geschickterweise ist vorgesehen, dass vor dem Schritt des Zusammenbringens, insbesondere vor dem Schritt der spanabhebende Bearbeitung auf das Ende eines Kunststoffprofiles ein Verbindungsstück aufgesetzt wird.

Vorzugsweise ist bei der Kämpferbearbeitung gefunden worden, dass es günstig ist, ein Verbindungsstück auf das Ende des Kunststoffprofiles welches als Kämpfer einzusetzen ist, aufzusetzen. Es sei an dieser Stelle klargestellt, dass die Formulierung " ein Verbindungsstück" bewusst gewählt ist und unabhängig von der vorgenannten Ausgestaltung des Verbindungsstückes zu sehen ist.

Des Weiteren ist vorgesehen, dass vor dem Schritt der spanabhebende Bearbeitung die beiden Kunststoffprofile auf je einer Spannvorrichtung aufgespannt werden, und diese Aufspannung während der Abfolge der Schritte spanabhebende Bearbeitung, Zusammenbringen und Einbringen von Klebstoff gelöst oder nicht gelöst wird.

Für jedes Kunststoffprofil ist eine eigene Spannvorrichtung vorgesehen. Die Spannvorrichtung besitzt natürlich einen Spannantrieb, der dafür vorgesehen ist, das Kunststoffprofil während seiner Bearbeitung und bei Durchführung des erfindungsgemäßen Verfahrens zuverlässig und positionstreu zu halten. Des Weiteren ist für die Spannvorrichtung jeweils ein eigener Bewegungsantrieb vorgesehen, durch den es möglich ist, das Kunststoffprofile entsprechend zu bewegen und zu positionieren. Es ist dabei günstig, dass die beiden Verbindungsbereiche der Kunststoffprofil durch diese Beweglichkeit der Spannvorrichtungen je nach Bedarf aufeinander zu oder voneinander weg bewegbar sind.

Günstiger Weise bleibt die Aufspannung der Kunststoffprofile auf der jeweiligen Spannvorrichtung während der Abfolge der Schritte spanabhebende Bearbeitung, Zusammenbringen und Einbringen von Klebstoff erhalten, die Aufspannung wird also nicht gelöst. Hierdurch wird eine hohe Genauigkeit bei der Herstellung eines entsprechenden Rahmens erreicht.

Hierauf ist der erfindungsgemäße Vorschlag aber nicht beschränkt, es ist grundsätzlich möglich, dass die Aufspannung zwischen den einzelnen Schritten gelöst wird, also zum Beispiel der Schritt spanabhebende Bearbeitung in einer ersten Spannvorrichtung in einer ersten Bearbeitungsmaschine, und das Zusammenbringen bzw. Einbringen von Klebstoff in einer hiervon getrennten zweiten Spannvorrichtung, in einer zweiten Bearbeitungsmaschine erfolgt. Das Aufspannen erhöht natürlich in jedem Fall die Genauigkeit der Bearbeitung, die Verteilung der verschiedenen Bearbeitungsschritte auf unterschiedliche Bearbeitungsmaschinen erhöht die Flexibilität der Bearbeitung bzw. Produktion.

Wie eingangs bereits beschrieben ist bei dem erfindungsgemäßen Verfahren effektiv sowohl eine Eckverbindung wie auch eine Kämpferverbindung bei der Herstellung eines Fensterrahmens möglich.

So ist in einer ersten bevorzugten Ausführungsform diesbezüglich vorgesehen, dass insbesondere zur Herstellung einer Kämpferverbindung, an dem zweiten Kunststoffprofil seitlich ein Verbindungsstück positioniert und auf diesem befestigt wird, auf welchen das erste Kunststoffprofil, der Kämpfer, aufgesetzt wird und an dem zweiten Kunststoffprofil mindestens eine Bohrung als spanabhebende Bearbeitung angebracht wird wodurch ein Zugang zu dem von den Verbindungsbereichen des ersten und zweiten Kunststoffprofil gebildeten Verbindungsraum hergestellt wird, und in die Bohrung zumindest teilweise ein Teil der Klebstoffspendeeinheit eingeführt wird, die den Verbindungsraum dann mit Klebstoff füllt.

Klarstellend sei hier zunächst bemerkt, dass auch hier die Nennung des Verbindungsstückes in der Form "ein Verbindungsstück" sich nicht zwingend auf die vorgenannte Einführung des Merkmales "Verbindungsstück" bezieht. Insbesondere ist vorgesehen, dass dieses Verbindungsstück zum Beispiel vor einer spanabhebenden Bearbeitung auf der Seiten- bzw. Mantelfläche des zweiten Kunststoffprofiles positioniert und befestigt, zum Beispiel aufgeschraubt wird. In diesem Fall wird das Verbindungsstück ein Teil des zweiten Kunststoffprofiles, weil sich insbesondere an diesem dann auch der Verbindungsbereich ergibt, durch welchen eine feste stabile Verbindung zwischen dem ersten und zweiten Kunststoffprofil hergestellt wird.

Die Verfahrensabfolge ist dabei zum Beispiel wie folgt:
- Positionieren und Befestigen des Zwischenstücks auf dem (zweiten) Kunststoffprofil (im Rahmen dieser Anmeldung oftmals als Holm bezeichnet)
- Zusammenbringen der beiden zu verbindenden Kunststoffprofile
- spanabhebende Bearbeitung zumindest eines Kunststoffprofils (zum Beispiel Einbohren von Klebstoffzuführöffnungen in den Holm)
- Einbringen von Klebstoff in den Verbindungsraum

Alternativ kann die Verfahrensabfolge auch wie folgt sein:
- spanabhebende Bearbeitung zumindest eines Kunststoffprofils (zum Beispiel Einbohren von Klebstoffzuführöffnungen in den Holm)
- Positionieren und Befestigen des Zwischenstücke auf dem (zweiten) Kunststoffprofil (im Rahmen dieser Anmeldung oftmals als Holm bezeichnet)
- Zusammenbringen der beiden zu verbindenden Kunststoffprofile
- Einbringen von Klebstoff in den Verbindungsraum

Es sei in diesem Zusammenhang, auch mit Blick auf die nachfolgende alternative Variante zur Ausgestaltung einer Kämpferverbindung bemerkt, dass die Reihenfolge der Anordnung des Verbindungsstückes und der Ausführung der spanabhebenden Bearbeitung, dem Einbringen der Bohrung, beliebig ist.

In der alternativen Ausgestaltung zur Realisierung einer Kämpferverbindung umfasst die Erfindung auch den Vorschlag, dass auf das erste Kunststoffprofil, dem Kämpfer, ein Verbindungsstück aufgesetzt wird und an dem zweiten Kunststoffprofil mindestens eine Bohrung als spanabhebende Bearbeitung angebracht wird wodurch ein Zugang zu dem von den Verbindungsbereichen des ersten und zweiten Kunststoffprofil gebildeten Verbindungsraum hergestellt wird, und in die Bohrung zumindest teilweise ein Teil der Klebstoffspendeeinheit eingeführt wird, die den Verbindungsraum dann mit Klebstoff füllt.

In dem hier beschriebenen Ausführungsbeispiel wird das Verbindungstück zum Beispiel auf die Stirnfläche des als Kämpfer dienenden ersten Kunststoffprofil aufgesetzt, zum Beispiel auf geklemmt.

Für die beiden vorgenannten Varianten zur Ausgestaltung einer Kämpferverbindung sei des Weiteren bemerkt, dass geschickterweise die Anordnung der Bohrung von der der Kämpferverbindung gegenüberliegenden Außenseite des Holmes durchgeführt wird, wo in der Regel eine gute Zugänglichkeit besteht. Geschickterweise kann dann die hier eingebrachte Bohrung/en (eine oder mehrere) durch eine geschickte Ausspritzen mit Klebstoff wieder verschlossen werden. Wenn nötig, kann hier auch eine Nachbearbeitung zum Beispiel mit dem sowieso vorhandenen Fräswerkzeug erfolgen um eine ästhetisch ansprechende Gestaltung zu erreichen.

In diesem Zusammenhang sei auch bemerkt, dass sich für die beiden vorgenannten Verfahren zur Herstellung einer Kämpferverbindung in vorteilhafter Weise die Ausgestaltung der Klebstoffspendeeinheit als Klebelanze bewährt hat. Dabei wird das vordere Ende der Klebelanze durch die Bohrung geführt. Werden mehrere Klebelanzen eingesetzt, was die Bearbeitung entsprechend beschleunigt, sind vorzugsweise natürlich auch mehrere Bohrungen an dem Holm vorgesehen.

Des Weiteren ist günstigerweise vorgesehen, dass der Verbindungsbereich die Stirn- bzw Gehrungsfläche oder eine Seitenfläche des Kunststoffprofiles ist, und an der Stirn- bzw Gehrungsfläche oder an der Seitenfläche die spanabhebende Bearbeitung erfolgt.

Für den Fall, dass mit dem erfindungsgemäßen Verfahren eine Eckverbindung eines Fensterrahmens hergestellt wird, befindet sich der Verbindungsbereich an der Stirn- bzw. Gehrungsfläche der beiden Kunststoffprofile. Für den alternativen Fall, dass mit dem erfindungsgemäßen Verfahren eine Kämpferverbindung realisiert wird befindet sich ein Verbindungsbereich (des Kämpfers) an der Stirn- bzw Gehrungsfläche und der Verbindungsbereich am Holm (als zweites Kunststoffprofil) an dessen Seiten- bzw. Mantelfläche, ein gewisses Stück von dem jeweiligen Endbereich des Profiles abgesetzt bzw. entfernt.

Des Weiteren wird die erfindungsgemäße Aufgabe durch eine Vorrichtung für das Verbinden von zwei Kunststoffprofilen, zum Beispiel für die Herstellung eines Tür- oder Fensterrahmens oder Teilrahmens gelöst. Diese zeichnet sich insbesondere dadurch aus, dass sie eine spanabhebende Bearbeitungseinheit und eine Klebstoffspendeeinheit aufweist, wobei die spanabhebende Bearbeitungseinheit für eine spanabhebende Bearbeitung zumindest im Verbindungsbereich der zu verbindenden Kunststoffprofile vorgesehen ist und die Klebstoffspendeeinheit für ein Aufbringen einer Klebstoffschicht zumindest auf einem Profil im Verbindungsbereich der zu verbindenden Kunststoffprofile vorgesehen ist, wobei eine Absaugeinheit für ein Absaugen der durch die spanabhebende Bearbeitungseinheit erzeugten Späne und/oder für die aus dem Klebstoff austretenden Lösungsmitteldämpfe vorgesehen ist.

Auch die erfindungsgemäß vorgeschlagene Vorrichtung löst die eingangs gestellte Aufgabe überzeugend und effektiv. Anstelle eines Verschweißens wird nunmehr ein Verkleben der Kunststoffprofile vorgeschlagen wodurch die Bildung einer Schweißwulst, die ursächlich verantwortlich für den erheblichen Nachbearbeitungsaufwand war, zuverlässig vermieden wird. Zusätzlich bietet dieser Vorschlag den überraschenden Vorteil, dass diese nicht nur zu guten Arbeitsergebnissen der zu produzierenden Fensterrähmen führt, sondern auch eine einerseits effiziente und andererseits auch bezüglich des Arbeitsschutzes vorteilhafte Weiterentwicklung darstellt.

Dabei ist die Ausgestaltung der Absaugeinheit sehr variabel. So ist zum Beispiel vorgesehen, dass eine zentrale Absaugeinheit sowohl für das Absaugen der bei dem der spanabhebenden Bearbeitung erzeugten Späne wie auch bei dem eingebrachten Klebstoff freiwerdenden Lösungsmitteldämpfen eingesetzt wird. Dies kann durch eine geschickte räumliche Anordnung der Klebstoffspendeeinheit und der spanabhebenden Bearbeitungseinheit erfolgen (diese befinden sich zum Beispiel in einem integralen Bearbeitungskopf) oder aber es sind entsprechende Absaugschläuche mit einer Klappen- bzw. Ventilsteuerung vorgesehen.

Natürlich umfasst die Erfindung auch eine Ausgestaltung, bei der die Abaugeinheit aus zwei Saugeinheiten, eine für die spanabhebende Bearbeitung und eine für die Klebstoffspendeeinheit besteht.

Bevorzugt ist vorgesehen, dass die Vorrichtung eine spanabhebende Bearbeitungseinheit und eine Klebstoffspendeeinheit aufweist, wobei die spanabhebende Bearbeitungseinheit für eine spanabhebende Bearbeitung zumindest im Verbindungsbereich der zu verbindenden Kunststoffprofile vorgesehen ist und die Klebstoffspendeeinheit für ein Aufbringen einer Klebstoffschicht zumindest auf einem Profil im Verbindungsbereich der zu verbindenden Kunststoffprofile vorgesehen ist.

Bei einer vorteilhaften Ausgestaltung des Vorschlags ist die spanabhebende Bearbeitungseinheit ein Bohrwerkzeug oder ein Fräser, das / der zumindest entlang einer Raumachse beweglich gelagert und geführt ist. Durch den Fräser ist eine exakte, insbesondere parallele Bearbeitung der Gehrungsflächen der zu verbindenden Profilstücke möglich, das gerade im Zusammenwirken auf den Kleber eine hocheffiziente und saubere Verbindungstechnik der Fensterecken ergibt.

Weiterhin ist vorteilhaft, dass die Klebstoffspendeeinheit eine Klebstoffauftrageinheit oder eine Klebstoffspritzeinheit ist, oder eine Klebstofflanze umfasst, und zumindest Teile der Klebstoffspendeeinheit zumindest entlang zweier, bevorzugt dreier Raumachsen beweglich gelagert und geführt sind.

Vorteilhafter Weise wird zumindest der Teil der Klebstoffspendeeinheit, der den Klebstoff an das Kunststoffprofil absondert (zum Beispiel die Düse an einer Lanze) hochflexibel und im Raum gut positionierbar ausgeführt, damit diese Düse effektiv eingesetzt werden kann und auch an die jeweilige Lage der die Kammern unterteilenden Kammerstege positionierbar ist.

Es reicht dabei aus, wenn zumindest der den Klebstoff absondernde Teil der Klebstoffspendereinheit hoch beweglich ist.

Vorteilhafterweise ist vorgesehen, dass die Vorrichtung für jedes Kunststoffprofil je eine Spannvorrichtung aufweist, die dazu dient, das jeweilige Kunststoffprofil zu halten und die Spannvorrichtungen derart beweglich sind, dass die aufgespannten Kunststoffprofile aufeinander zu oder voneinander weg bewegbar sind.

Für jedes Kunststoffprofil ist eine eigene Spannvorrichtung vorgesehen. Die Spannvorrichtung besitzt natürlich einen Spannantrieb, der dafür vorgesehen ist, das Kunststoffprofil während seiner Bearbeitung und bei Durchführung des erfindungsgemäßen Verfahrens zuverlässig und positionstreu zu halten. Des Weiteren ist für die Spannvorrichtung jeweils ein eigener Bewegungsantrieb vorgesehen, durch den es möglich ist, das Kunststoffprofil entsprechend zu bewegen und zu positionieren. Es ist dabei günstig, dass die beiden Verbindungsbereiche der Kunststoffprofile durch diese Beweglichkeit der Spannvorrichtungen je nach Bedarf aufeinander zu oder voneinander weg bewegbar sind.

Bevorzugt ist vorgesehen, dass die Vorrichtung eine Klebstoffspendeeinheit aufweist, die für ein Aufbringen einer Klebstoffschicht zumindest auf einem Profil in einem Verbindungsbereich der zu verbindenden Kunststoffprofile vorgesehen ist und dass die Klebstoffspendeeinheit als Klebstoffspritzeinheit ausgebildet ist, die eine Klebstofflanze umfasst, wobei die Klebstofflanze zumindest entlang ihrer Längserstreckung beweglich gelagert und geführt ist und gegen ein in einer Spannvorrichtung der Vorrichtung einspannbares Kunststoffprofil anstell- und wegbewegbar ist.

Ferner wird die Aufgabe gelöst durch ein Verfahren für das Verbinden von zwei Kunststoffprofilen, zum Beispiel für die Herstellung eines Tür- oder Fensterrahmens oder Teilrahmens.

Des Weiteren umfasst die Erfindung auch ein Verwenden der erfindungsgemäßen Vorrichtung zum Durchführen des erfindungsge-mäßen Verfahrens.

In diesem Zusammenhang wird insbesondere darauf hingewiesen, dass alle im Bezug auf die Vorrichtung beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

In der Zeichnung ist die Erfindung insbesondere in einem Ausführungsbeispiel schematisch dargestellt. Es zeigen:
Fig. 1 eine perspektivische Teilansicht einer erfindungsgemäßen Ausführungsform einer Vorrichtung für das Verbinden von zwei Kunststoffprofilen, und
Fig. 2 ein vergrößerte Detaildarstellung des in Figur 1 mit dem Bezugszeichen la-la bezeichneten Ausschnitts der Vorrichtung.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

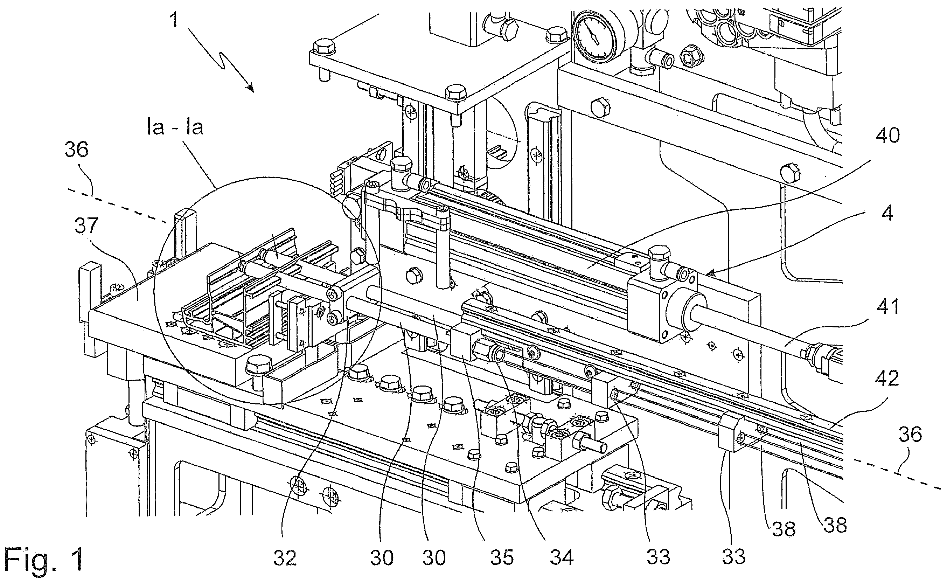

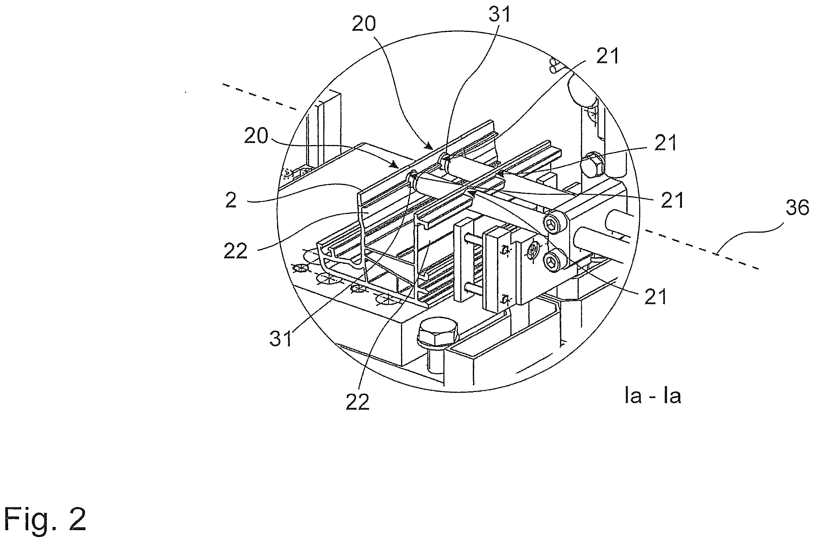

Die Figuren 1 und 2 zeigen eine Vorrichtung 1 für das Verbinden von zwei Kunststoffprofilen 2, die beispielsweise zum Herstellen eines Tür- oder Fensterrahmens oder auch eines Rahmenteils eines Tür- oder Fensterrahmens (z.B. Einkleben eines Kämpfers unter einen rechten Winkel an einem Pfosten) geeignet ist. Die Vorrichtung 1 umfasst eine in den Figuren nicht dargestellte spanabhebende Bearbeitungseinheit sowie eine Klebstoffspendeeinheit 3.

Der besseren Übersichtlichkeit halber ist lediglich ein kurzer Abschnitt eines ersten Kunststoffprofils 2 dargestellt, das länglich und mit zueinander beabstandet und gegenüberliegend angeordneten wandförmigen Profilabschnitten 22 ausgebildet ist. Überdies sind für einen besseren Einblick in das Innere des Kunststoffprofils 2 verdeckende, insbesondere Sichtflächen bildende Profilabschnitte des Kunststoffprofils 2 weggelassen.

Bei dem zweiten nicht dargestellten Kunststoffprofil handelt es sich um einen sogenannten Kämpfer, der eine Querstrebe des Fensterrahmens bildet und mit dem ersten Kunststoffprofil 2 wie üblich mittels eines Verbindungsstücks zu verbinden ist. Dazu wird das Verbindungsstück mit dem ersten Kunststoffprofil 2 verbunden und der Kämpfer auf das Verbindungsstück derart aufgesteckt, dass er insbesondere senkrecht von dem ersten Kunststoffprofil 2 abragt. Das Verbindungsstück kann selbstklemmend ausgebildet sein und in dem ersten Kunststoffprofil 2 durch Verklemmen fixiert werden. Zum unlösbaren Verbinden des Kämpfers mit dem ersten Kunststoffprofil 2 kann das Verbindungsstück mittels der Vorrichtung 1 zusätzlich mit dem ersten Kunststoffprofil 2 verklebt werden.

Selbstverständlich kann das zweite Kunststoffprofil statt als Kämpfer auch wie das erste Kunststoffprofil 2 ausgebildet sein und einen identischen Querschnitt aufweisen. In diesem Fall kann die Vorrichtung 1 verwendet werden, um an den beiden Kunststoffprofilen durch spanabhebendes Bearbeiten zueinander korrespondierende und gegenüber der Längserstreckung des jeweiligen Kunststoffprofils um 45° geneigte Gehrungsflächen auszubilden und die beiden Kunststoffprofile zum Bilden einer rechtwinkligen Rahmenecke zu verbinden. Es versteht sich, dass die Vorrichtung 1 auch für abweichende Neigungen der Gehrungsflächen und/oder einen abweichenden Eckwinkel der Kunststoffprofile geeignet ist.

Die Bearbeitungseinheit kann in an sich bekannter Weise beispielsweise als ein Bohrwerkzeug oder ein Fräser vorgesehen sein. Sie ist für eine spanabhebende Bearbeitung zumindest in einem Verbindungsbereich 20 der Kunststoffprofile 2 vorgesehen. Dazu ist die Bearbeitungseinheit zumindest entlang einer Raumachse beweglich gelagert und geführt, um ein Werkzeug der Bearbeitungseinheit zu dem zu bearbeitenden Verbindungsbereich 20 der Kunststoffprofile 2 hin oder von diesem weg zu verschieben.

Ferner ist die Bearbeitungseinheit innerhalb einer Fertigungslinie relativ zu der Klebstoffspendeeinheit 3 derart angeordnet, dass die zu verbindenden Kunststoffprofile 2 spanabhebend bearbeitet werden, bevor sie der Klebstoffspendeeinheit 3 zugeführt werden. Dabei kann der zuführende Transport der Kunststoffprofile 2 entlang der Fertigungslinie manuell oder automatisch erfolgen.

Die Klebstoffspendeeinheit 3 ist für ein Aufbringen einer Klebstoffschicht zumindest auf einem Kunststoffprofil 2 im Verbindungsbereich 20 vorgesehen. Die Klebstoffspendeeinheit 3 ist ferner als eine Klebstoffspritzeinheit ausgebildet. Sie ist entlang einer Raumachse 36 beweglich gelagert und geführt, um einen Klebstoffspender der Klebstoffspendeeinheit 3 zu dem zu bearbeitenden Verbindungsbereich 20 der Kunststoffprofile 2 hin oder von diesem weg zu verschieben. Alternativ kann die Klebstoffspendeeinheit 3 auch als eine Klebstoffauftrageinheit vorgesehen sein.

Die Klebstoffspendeeinheit 3 umfasst einen Werkstückträger 37 mit einer Auflagefläche und einer Anlagefläche zum Ausrichten der zu verbindenden Kunststoffprofile 2 sowie eine nicht dargestellte Spannvorrichtung, mittels derer die zu verbindenden Kunststoffprofile 2 für das Aufbringen der Klebstoffschicht in ihrer Ausrichtung fixiert werden können.

Ferner umfasst die Klebstoffspendeeinheit 3 zwei Klebstofflanzen 30, die entlang ihrer Längserstreckung in Richtung der Raumachse 36 beweglich gelagert und mittels einer Lanzenführung 32 geführt sind. Entsprechend können die Klebstofflanzen 30 gegen das mittels der Spannvorrichtung eingespannte Kunststoffprofil 2 angestellt und von diesem wegbewegt werden. Die beiden Klebstofflanzen 30 erstrecken sich parallel zueinander und sind an einem Lanzenträger 35 der Klebstoffspendeeinheit 3 befestigt, von dem sie in Richtung des Werkstückträgers 37 abragen. Es wird angemerkt, dass auch eine Klebstoffspendeeinheit 3 mit einer einzelnen Klebstofflanze 30 unter den Schutzbereich der Erfindung fällt.

Jede Klebstofflanze 30 umfasst eine Klebstoffdüse 31, die an dem von dem Lanzenträger 35 weg weisenden freien Ende der Klebstofflanze 30 angeordnet ist. Die Klebstoffdüse 31 dient als Klebstoffspender zum präzisen Auftragen eines Klebstoffs auf das Kunststoffprofil 2 in einem Verbindungsbereich 20. Der Lanzenträger 35 hat zwei Schlauchanschlüsse 34, die an der den Klebstofflanzen 30 abgewandten Seite des Lanzenträgers 35 angeordnet und zum Anschließen jeweils eines Klebstoffschlauchs 38 vorgesehen sind. Die Klebstoffschläuche 38 sind in Schlauchhaltern 33 gehalten.

Zudem umfasst die Klebstoffspendeeinheit 3 einen nicht dargestellten Klebstoffbehälter, der über jeweils einen Klebstoffschlauch 38 mit jeder Klebstofflanze 30 fluidverbunden ist. Wenn für das Verbinden der Kunststoffprofile 2 ein Zweikomponentenkleber als Klebstoff verwendet wird, umfasst der Klebstoffbehälter zwei separate Behältnisse für jeweils eine Komponente des Zweikomponentenklebers. In diesem Fall kann auch jeder Klebstoffschlauch 38 und jede Klebstofflanze 30 zwei separate Kanäle aufweisen, um die beiden Komponenten des Zweikomponentenklebers bis zu den Klebstoffdüsen 31 voneinander getrennt zu führen und erst in den Klebstoffdüsen 31 miteinander zu vermengen. Die Klebstoffdüsen 31 sind dann ausgebildet, ein möglichst vollständiges Vermengen der beiden Komponenten des Zweikomponentenklebers zu gewährleisten. Hierzu ist günstigerweise vorgesehen, dass die Klebstoffdüsen 31 von der Lanze 30 trennbar, z.B. abschraubbar sind. Dies erleichtert das Reinigen der Anordnung.

Die Klebstoffspendeeinheit 3 umfasst weiterhin eine Antriebseinrichtung 4. Die Antriebseinrichtung 4 ist angeordnet und ausgebildet, den Lanzenträger 35 und die daran befestigten Klebstofflanzen 30 entlang der Raumachse 36 zu verschieben. Dazu umfasst die Antriebseinrichtung 4 einen Anstellzylinder 40, der beispielsweise eine Hydraulik oder einen elektrisch betätigten Spindelantrieb umfasst, einen mit dem Anstellzylinder 40 verbundene Kolbenstange 41 und ein mit der Kolbenstange 41 verbundenes Verschiebemittel 42, das als Metallprofil ausgebildet und entlang der Raumachse 36 verschiebbar ist. An dem Verschiebemittel 42 sind der Lanzenträger 35 und die Schlauchhalter 33 beabstandet zueinander angebracht, so dass die in den Schlauchhaltern 33 gehaltenen Klebstoffschläuche 38 synchron mit dem Lanzenträger 35 verschoben werden.

Während des Betriebs der Vorrichtung 1 wird das Kunststoffprofil 2 von der spanabhebenden Bearbeitungseinheit in dem Verbindungsbereich 20 spanabhebend bearbeitet, indem in jeden Profilabschnitt 22 zwei zu den beiden Klebstofflanzen 30 hinsichtlich Durchmesser und Abstand korrespondierende Durchstechöffnungen 21 gebohrt werden. Danach wird das Verbindungsstück in dem Kunststoffprofil 2 verklemmt und der Kämpfer auf das Verbindungsstück aufgesteckt. Nach dem Aufstecken des Kämpfers wird das Kunststoffprofil 2 zu der Klebstoffspritzvorrichtung transportiert und auf dem Werkstückträger 37 eingespannt.

In einem weiteren Schritt werden die beiden Klebstofflanzen 30 von der Antriebseinrichtung 4 entlang der Raumachse 36 verschoben und durch die Durchstechöffnungen 21 gegen das spanabhebend bearbeitete Kunststoffprofil 2 in einem Verbindungsbereich 20 angestellt. Dann wird eine Klebstoffschicht auf das Kunststoffprofil 2 in dem Verbindungsbereich 20 aufgetragen. Anschließend härtet der aufgetragene Klebstoff aus, wodurch eine unlösbare Verbindung des Kunststoffteils 2 mit dem Kämpfer hergestellt ist. Im Falle eines bei Luftkontakt aushärtenden Zweikomponentenklebers kann die zum Aushärten erforderliche Zeitspanne zwischen 5 Minuten und 7 Minuten dauern und dauert bevorzugt 6 Minuten.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Verfahren für das Verbinden von zwei Kunststoffprofilen, zum Beispiel für die Herstellung eines Tür- oder Fensterrahmens oder Teilrahmens, **gekennzeichnet durch** die Abfolge, insbesondere genau in der angegebenen Reihenfolge, der folgenden Schritte:
- spanabhebende Bearbeitung zumindest eines Kunststoffprofils zumindest in einem Verbindungsbereich dieses Kunststoffprofils
- Zusammenbringen der beiden zu verbindenden Kunststoffprofile derart, dass sich aus den jeweiligen Verbindungsbereichen der Kunststoffprofile ein gemeinsamer Verbindungsraum ergibt
- Einbringen von Klebstoff in den Verbindungsraum, um so die beiden Kunststoffprofile miteinander zu verbinden.

2. Verfahren nach Anspruch 1, **dadurch gekennzeichnet, dass** durch die spanabhebende Bearbeitung die jeweiligen Verbindungsbereiche der Kunststoffprofile zueinander parallel ausgerichtet werden.

3. Verfahren nach einem der vorhergehenden Ansprüche, **dadurch gekennzeichnet, dass** durch die spanabhebende Bearbeitung in dem jeweiligen Verbindungsbereich ein Aufnahmeraum gebildet wird.

4. Verfahren nach einem der vorhergehenden Ansprüche, **dadurch gekennzeichnet, dass** der bzw. ein Aufnahmeraum in den jeweiligen Verbindungsbereich nach oder vor dem Schritt des Zusammenbringens der beiden zu verbindenden Kunststoffprofile, insbesondere vor dem Schritt der spanabhebende, insbesondere parallelen spanabhebende Bearbeitung des Kunststoffprofiles in den jeweiligen Verbindungsbereich eingearbeitet wird, und der mindestens eine Aufnahmeraum mindestens teilweise den Verbindungsraum bildet.

5. Verfahren nach einem der vorhergehenden Ansprüche, **dadurch gekennzeichnet, dass** vor oder nach dem Zusammenbringen der beiden zu verbindenden Kunststoffprofile in den Aufnahmeraum ein Verbindungsstück eingeführt wird und die beiden Kunststoffprofile über das Verbindungsstück miteinander verbunden, insbesondere verklebt werden.

6. Verfahren nach einem der vorhergehenden Ansprüche, **dadurch gekennzeichnet, dass** vor dem Schritt des Zusammenbringens, insbesondere vor dem Schritt der spanabhebende Bearbeitung auf das Ende eines Kunststoffprofiles ein Verbindungsstück aufgesetzt wird.

7. Verfahren nach einem der vorhergehenden Ansprüche, **dadurch gekennzeichnet, dass** vor dem Schritt der spanabhebende Bearbeitung die beiden Kunststoffprofile auf je einer Spannvorrichtung aufgespannt werden, und diese Aufspannung während der Abfolge der Schritte spanabhebende Bearbeitung, Zusammenbringen und Einbringen von Klebstoff gelöst oder nicht gelöst wird.

8. Verfahren nach einem der vorhergehenden Ansprüche, **dadurch gekennzeichnet, dass** insbesondere zur Herstellung einer Kämpferverbindung, an dem zweiten Kunststoffprofil seitlich ein Verbindungsstück positioniert und auf diesem befestigt wird, auf welchen das erste Kunststoffprofil, der Kämpfer, aufgesetzt wird und an dem zweiten Kunststoffprofil mindestens eine Bohrung als spanabhebende Bearbeitung angebracht wird, wodurch ein Zugang zu dem von den Verbindungsbereichen des ersten und zweiten Kunststoffprofil gebildeten Verbindungsraum hergestellt wird, und in die Bohrung zumindest teilweise ein Teil der Klebstoffspendeeinheit eingeführt wird, die den Verbindungsraum dann mit Klebstoff füllt.

9. Verfahren nach einem der vorhergehenden Ansprüche, **dadurch gekennzeichnet, dass** insbesondere zur Herstellung einer Kämpferverbindung, auf das erste Kunststoffprofil, dem Kämpfer, ein Verbindungsstück aufgesetzt wird und an dem zweiten Kunststoffprofil mindestens eine Bohrung als span-abhebende Bearbeitung angebracht wird, wodurch ein Zugang zu dem von den Verbindungsbereichen des ersten und zweiten Kunststoffprofil gebildeten Verbindungsraum hergestellt wird, und in die Bohrung zumindest teilweise ein Teil der Klebstoffspendeeinheit eingeführt wird, die den Verbindungsraum dann mit Klebstoff füllt.

10. Verfahren nach einem der vorhergehenden Ansprüche, **dadurch gekennzeichnet, dass** der Verbindungsbereich die Stirn- bzw. Gehrungsfläche oder eine Seitenfläche des Kunststoffprofiles ist, und an der Stirn- bzw. Gehrungsfläche oder an der Seitenfläche die spanabhebende Bearbeitung erfolgt.

11. Vorrichtung für das Verbinden von zwei Kunststoffprofilen (2), zum Beispiel für die Herstellung eines Tür- oder Fensterrahmens oder Teilrahmens, wobei die Vorrichtung eine spanabhebende Bearbeitungseinheit und eine Klebstoffspendeeinheit (3) aufweist, wobei die spanabhebende Bearbeitungseinheit für eine spanabhebende Bearbeitung zumindest im Verbindungsbereich (20) der zu verbindenden Kunststoffprofile (2) vorgesehen ist und die Klebstoffspendeeinheit (3) für ein Aufbringen einer Klebstoffschicht zumindest auf einem Profil (2) im Verbindungsbereich (20) der zu verbindenden Kunststoffprofile (2) vorgesehen ist, wobei eine Absaugeinheit für ein Absaugen der durch die spanabhebende Bearbeitungseinheit erzeugten Späne und/oder für die aus dem Klebstoff austretenden Lösungsmitteldämpfe vorgesehen ist.

12. Vorrichtung nach Anspruch 11, **dadurch gekennzeichnet, dass** die spanabhebende Bearbeitungseinheit ein Bohrwerkzeug oder ein Fräser ist, das / der zumindest entlang einer Raumachse beweglich gelagert und geführt ist.

13. Vorrichtung nach einem der vorhergehenden Ansprüche 11 bis 12, **dadurch gekennzeichnet, dass** die Klebstoffspendeeinheit (2) eine Klebstoffauftrageinheit oder eine Klebstoffspritzeinheit ist oder eine Klebstofflanze (30) umfasst, und zumindest ein Teil der Klebstoffspendeeinheit (2) zumindest entlang zweier, bevorzugt dreier Raumachse (36) beweglich gelagert und geführt ist.

14. Vorrichtung nach einem der vorhergehenden Ansprüche 11 bis 13, **dadurch gekennzeichnet, dass** die Vorrichtung für jedes Kunststoffprofil je eine Spannvorrichtung aufweist, die dazu dient, das jeweilige Kunststoffprofil zu halten und die Spannvorrichtungen derart beweglich sind, dass die aufgespannten Kunststoffprofile aufeinander zu oder voneinander weg bewegbar sind.
